Europäisches Patentamt

**European Patent Office**

Office européen des brevets

(11) Numéro de publication: **0 220 086**
**B1**

(12) **FASCICULE DE BREVET EUROPEEN**

(45) Date de publication du fascicule du brevet:
**31.05.89**

(21) Numéro de dépôt: **86402000.3**

(22) Date de dépôt: **12.09.86**

(51) Int. Cl.⁴: **F17C 6/00**, F16L 59/06

(54) **Ligne de transfert de gaz liquéfié comportant un écran thermique muni d'un échangeur.**

(30) Priorité: **19.09.85 FR 8513892**

(43) Date de publication de la demande:
**29.04.87 Bulletin 87/18**

(45) Mention de la délivrance du brevet:
**31.05.89 Bulletin 89/22**

(84) Etats contractants désignés:
**CH DE FR GB IT LI NL**

(56) Documents cités:
**CH-A- 486 662**
**DE-A- 1 528 919**
**DE-A- 2 042 869**

**MACHINE DESIGN,**
**vol. 35, no. 13, 6 juin 1963, pages 141-145, Cleveland, Ohio, US: "Scanning the field for ideas"**

(73) Titulaire: **COMMISSARIAT A L'ENERGIE ATOMIQUE, 31/33, rue de la Fédération, F-75015 Paris(FR)**

(72) Inventeur: **Bedin, Eloi, 63A, rue des Ayguinards, F-38240 Meylan(FR)**
Inventeur: **Locatelli, Marcel, 4, Pré Morard Montbonnot, F-38240 Meylan(FR)**

(74) Mandataire: **Mongrédien, André et al, c/o BREVATOME 25, rue de Ponthieu, F-75008 Paris(FR)**

**Description**

L'invention concerne une installation cryogénique et une ligne de transfert de gaz liquéfié pour le transfert d'un fluide cryogénique entre un vase de stockage et un vase de réception.

Un fluide cryogénique est un gaz comprimé refroidi à très basse température jusqu'à sa liquéfaction.

Les lignes de transfert pour fluide cryogénique permettent de transporter un fluide cryogénique d'un réservoir de stockage jusqu'à un réservoir d'utilisation. L'utilisation grandissante de ces fluides dans des domaines de plus en plus divers a créé le besoin de lignes de transfert cryogénique présentant de bonnes performances thermiques. En particulier, elles doivent présenter de faibles pertes thermiques en ligne. Cela signifie que le fluide doit se réchauffer ou se vaporiser aussi peu que possible au cours de son transfert d'un récipient à l'autre. En d'autres termes, la ligne de transfert doit assurer une bonne isolation thermique par rapport au milieu extérieur.

D'autre part, cette ligne de transfert doit présenter une faible inertie thermique. Cela signifie qu'une ligne de transfert à température ambiante doit pouvoir être refroidie rapidement jusqu'à sa température d'utilisation sans apport important de frigories. En d'autres termes, la ligne de transfert doit présenter une capacité calorifique aussi faible que possible.

On connaît déjà, selon l'art antérieur, des lignes de transfert de gaz liquéfié composées de deux tubes coaxiaux, respectivement un tube de transfert interne dans lequel circule le fluide cryogénique et un tube externe qui entoure le tube de transfert. Une isolation thermique est réalisée entre ces deux tubes grâce à la présence d'un vide d'isolement. Une telle ligne de transfert est de conception simple, mais elle présente des pertes en ligne relativement importantes.

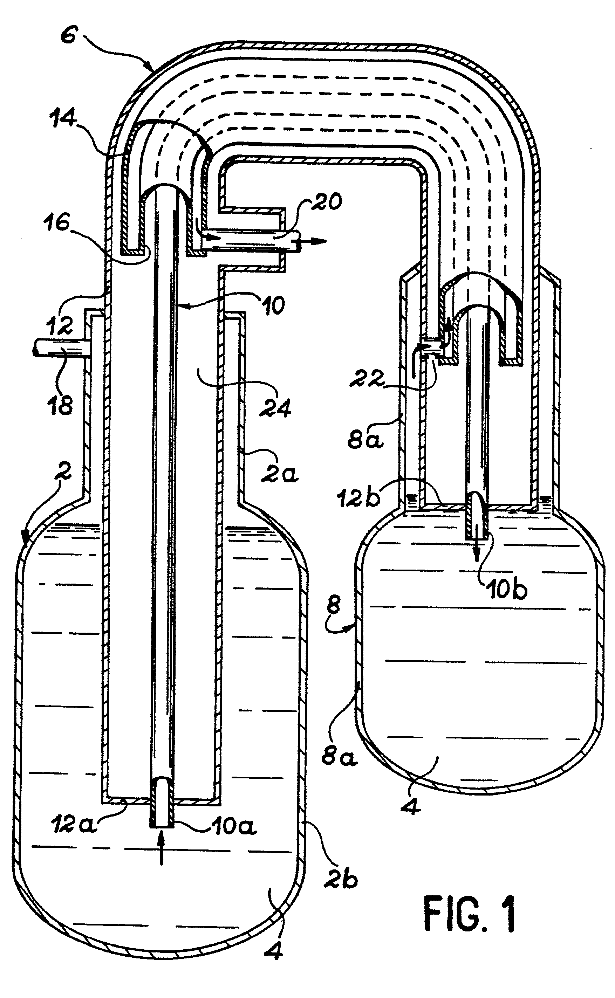

On connaît également, selon un art antérieur représenté sur la figure 1, une ligne de transfert pour fluide cryogénique composée de quatre tubes coaxiaux. La référence 2 désigne un vase de stockage contenant un gaz liquéfié 4. Ce gaz doit être acheminé au moyen de la ligne de transfert, désignée par la référence générale 6, jusqu'à un vase d'utilisation 8.

La ligne de transfert 6 se compose d'un tube interne ou tube de transfert 10 qui plonge, à chacune de ses deux extrémités 10a et 10b, respectivement dans le vase de stockage 2 et dans le vase d'utilisation 8. Autour du tube de transfert est disposé un tube externe 12 fermé à chacune de ses deux extrémités 12a et 12b. Un écran thermique est disposé entre le tube de transfert 10 et le tube externe 12. Cet écran a pour but de réduire les pertes en ligne pendant le transfert du fluide d'un vase à l'autre. Il est constitué de deux tubes coaxiaux désignés respectivement par les références 14 et 16. Il est fermé à chacune de ses deux extrémités de manière à constituer une enveloppe close.

Le transfert du fluide cryogénique ou gaz liquéfié du vase de stockage 2 au vase d'utilisation 8 est assuré au moyen d'une surpression sur le vase de stockage par le conduit 18 ou d'une pompe de circulation (non représentée) raccordée à une canalisation 20. Cette pompe de circulation assure une légère mise en dépression du vase d'utilisation par rapport au vase de stockage. En d'autres termes, la pression dans le vase d'utilisation est légèrement inférieure à la pression dans le vase de stockage. Sous l'effet de cette dépression, une circulation du gaz liquéfié 4 s'établit dans le tube de transfert 10.

Par ailleurs, aussi bien dans le vase de stockage que dans le vase d'utilisation se dégagent des vapeurs froides dues à l'évaporation du liquide 4. Ces vapeurs froides sont refoulées par la supression existante ou aspirées au moyen d'une pompe d'aspiration (non représentée) raccordée à la canalisation 20. Elles pénètrent donc par le passage 22 dans l'espace interne délimité par les tubes 14 et 16. Les vapeurs circulent ensuite le long de la ligne de transfert jusqu'à la canalisation d'aspiration 20 par laquelle elles sont évacuées. Ainsi, ces vapeurs froides constituent un écran thermique, qui s'oppose au réchauffement par l'atmosphère extérieure du tube de transfert 10.

En outre, afin de compléter l'isolation thermique, un vide est effectué dans l'espace interne 24 déimité entre la paroi externe du tube de transfert 10 et la paroi interne du tube externe 12. Il est également connu de remplir cet espace interne d'un super isolant. Un super isolant est un empilement de couches de feuilles isolantes métallisées (Mylar® recouvert d'aluminium), dans lequel chaque couche est isolée des couches adjacentes par un espaceur poreux. Dans une autre version (non représentée) l'écran peut être constitué d'un seul tube (16 ou 14) sur lequel est bobiné un conduit de passage des vapeurs froides venant du vase 8.

La ligne de transfert de l'art antérieur qui vient d'être décrite présente de bonnes performances thermiques, mais elle est de construction et de mise en œuvre délicates. En particulier, sa durée de mise en température est relativement longue.

On connaît également (DE-A-1 528 919) une ligne de transfert comportant un tube intérieur qui transporte un gaz liquéfié et qui est entouré par un tube formant une chemise de vide. Dans la partie de la ligne de transfert située hors du récipient de stockage, le tube intérieur est entouré par un tube de protection contre le rayonnement disposé à l'intérieur de la chemise de vide. Un échangeur thermique constitué par un tube réalisé en un matériau bon conducteur de la chaleur tel que le cuivre est soudé sur la presque totalité de sa longueur au tube de protection contre le rayonnement. Les vapeurs froides du liquide circulent à l'intérieur de ce tube d'échange de chaleur.

Un tel dispositif présente plusieurs inconvénients :

La circulation des vapeurs froides s'effectue à l'intérieur de la ligne de transfert. Il en résulte des problèmes d'isolement entre le tube dans lequel circulent ces vapeurs froides et le vide qui l'entoure.

De plus, le tube d'échange de chaleur à l'intérieur duquel circulent les vapeurs du gaz liquéfié présente l'inconvénient de jouer le rôle d'un pont thermique entre l'intérieur du vase de stockage et l'extérieur. Pour éviter ce phénomène, il se termine à ses deux extrémités par des tubes en acier allié, qui est un matériau mauvais conducteur de la chaleur. Toutefois, malgré cette disposition, il n'est pas possible d'éviter complètement la transmission de la chaleur.

Enfin, la consommation de gaz liquéfié de cet appareil est importante, en particulier lorsqu'il est en fonctionnement.

La présente invention a précisément pour objet une ligne de transfert pour un gaz liquéfié qui apporte une solution aux inconvénients mentionnés ci-dessus. Elle doit permettre en particulier de remédier aux problèmes d'isolement entre un tube d'échange de chaleur et la chemise de vide qui l'entoure. Elle ne doit pas comporter de pont thermique entre le vase de stockage et l'extérieur. Elle doit en outre nécessiter une faible consommation de vapeurs froides du gaz liquéfié, cette consommation ne devant pas être plus importante lorsque la ligne de transfert fonctionne que lorsqu'elle est à l'arrêt.

Ces caractéristiques sont obtenues, conformément à l'invention, par le fait que l'installation comporte un vase de stockage présentant un corps surmonté d'un col muni d'une ouverture, le corps contenant une quantité d'un gaz liquéfié, une canalisation d'aspiration étant raccordée au col du vase de stockage ; et une ligne de transfert de gaz liquéfié pour transférer ce gaz entre le vase de stockage et un vase d'utilisation, comportant un tube de transfert ayant une première extrémité plongeant dans le gaz liquéfié contenu dans le vase de stockage et une seconde extrémité apte à être reliée au vase d'utilisation, un tube externe entourant le tube de transfert et délimitant avec ce dernier un volume et un écran formé par un élément tubulaire, disposé dans le volume interne compris entre le tube de transfert et le tube externe, la ligne de transfert présentant sensiblement la forme d'un U renversé constitué par une première et une seconde branches sensiblement verticales, la première branche étant introduite au moins partiellement dans le col du vase de stockage, la seconde branche étant apte à être introduite au moins partiellement dans un col du vase d'utilisation, au moins un échangeur relié thermiquement à l'écran, ledit échangeur étant refroidi par une circulation de vapeurs froides provenant de la vaporisation d'une partie du gaz liquéfié contenu dans le vase de stockage et aspiré par la canalisation d'aspiration. Elle se caractérise en ce que ledit au moins un échangeur est situé exclusivement dans la première branche de la ligne de transfert et à l'intérieur du col du ré servoir de stockage.

Ainsi, une ligne de transfert conforme à l'invention comporte une séparation des fonctions de transport du gaz liquéfié et de refroidissement de l'écran disposé entre le tube de transfert et le tube externe. Il n'y a pas de circulation des vapeurs froides à l'intérieur de la ligne. Les problèmes d'isolement sont par conséquent supprimés. En outre, aucun pont thermique n'est créé. Enfin, la consommation de la ligne de transfert n'est pas plus importante lorsque cette ligne fonctionne que lorsqu'elle est à l'arrêt.

Selon une réalisation particulière, l'installation cryogénique comporte en outre un vase de réception présentant un corps et un col muni d'une ouverture, ledit corps étant destiné à recevoir une quantité d'un gaz liquéfié transférée à partir du vase de stockage par l'intermédiaire de la ligne de transfert, une canalisation d'aspiration étant raccordée à la partie supérieure du col, ledit écran étant muni d'un second échangeur thermique situé dans la seconde branche de la ligne de transfert et à l'intérieur du col du réservoir d'utilisation et relié thermiquement à l'écran, ledit échangeur étant refroidi par une circulation de vapeurs froides provenant de la vaporisation d'une partie du gaz liquéfié contenue dans le vase d'utilisation et aspirée par la canalisation d'aspiration.

Enfin, l'invention concerne une ligne de transfert de gaz liquéfié pour transférer un gaz liquéfié entre un vase de stockage et un vase d'utilisa tion, comportant un tube de transfert ayant une premièr extrémité apte à être plongée dans une quantité d'un gaz liquéfié contenue dans le vase de stockage et une seconde extrémité apte à être reliée au vase d'utilisation, un tube externe entourant le tube de transfert et délimitant avec ce dernier un volume et un écran formé par un élément tubulaire disposé dans le volume interne compris entre le tube de transfert et le tube externe, ladite ligne de transfert présentant sensiblement la forme d'un U renversé constitué d'une première et d'une seconde branches sensiblement verticales, ladite première branche étant apte à être introduite au moins partiellement dans un col du vase de stockage, la seconde branche étant apte à être introduite au moins partiellement dans un col d'un vase d'utilisation, un échangeur relié thermiquement à l'écran, l'échangeur étant destiné à être refroidi par une circulation de vapeurs froides provenant de la vaporisation d'une partie du gaz liquéfié contenue dans le vase de stockage et aspirée par une canalisation d'aspiration raccordée à ce col, caractérisée en ce que ledit échangeur est situé exclusivement dans la première branche de la ligne de transfert.

Selon une variante de réalisation destinée à un transfert de maintenance, dans lequel la ligne de transfert est mise en place de manière permanente entre un réservoir de stockage et un réservoir d'utilisation, l'écran thermique est muni d'un échangeur thermique, à chacune de ses deux extrémités. Ces échangeurs sont situés dans respectivement le col du vase de stockage et dans celui du vase d'utilisation.

De préférence, l'écran thermique est recouvert au moins partiellement d'un matériau cryo-absorbant sur sa paroi externe et éventuellement sur sa paroi interne.

L'écran thermique peut être constitué par un tube ou une tresse souple réalisé à partir d'un matériau bon conducteur de la chaleur tel que le cuivre ou l'aluminium. Le centrage des différents éléments est assuré par l'intermédiaire d'un matériau super isolant.

L'invention sera maintenant décrite plus en détail en référence aux figures annexées qui représentent un mode d'exécution de l'invention donné à titre illustratif. Sur ces figures :

- la figure 1, déjà décrite, représente une ligne de transfert cryogénique réalisée conformément à un art antérieur connu.

- la figure 2 représente un mode de réalisation d'une ligne de transfert de gaz liquéfié conforme à l'invention.

- la figure 3 représente un second mode de réalisation d'une ligne de transfert conforme à l'invention adaptée au cas d'un transfert de maintenance.

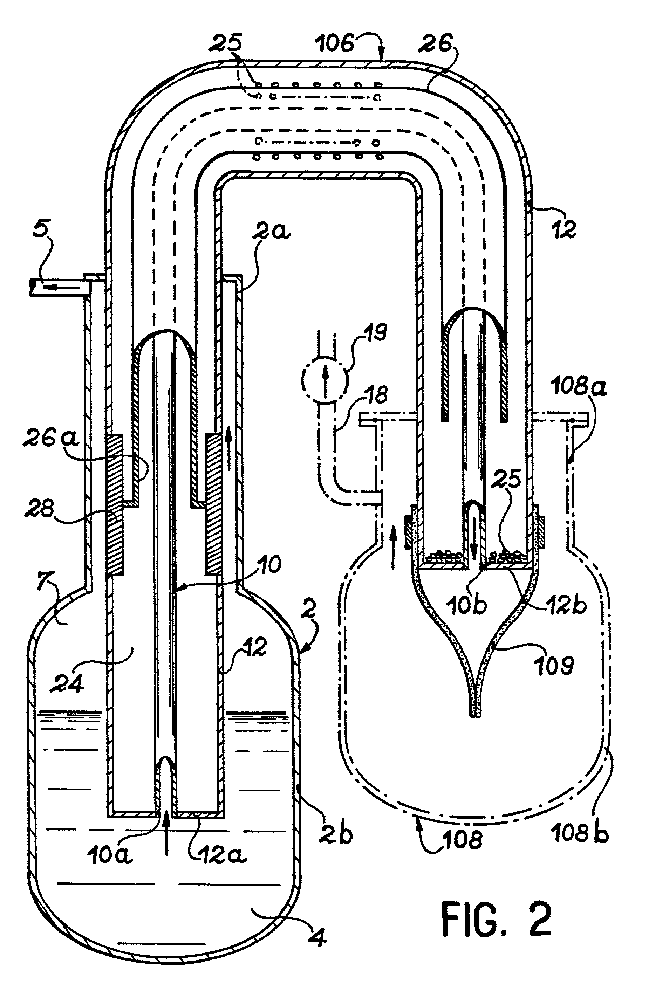

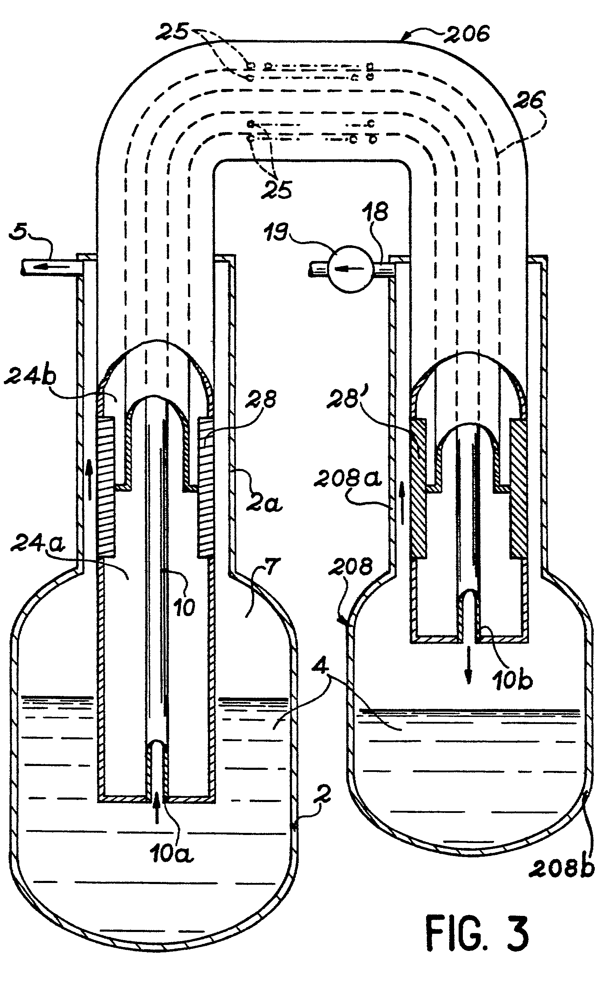

Sur les figures 2 et 3, les parties analogues à celles de la figure 1 ont été désignées par les mêmes chiffres de référence.

Sur la figure 2, le vase de stockage 2 est rempli d'une quantité d'un fluide cryogénique 4 constitué par un gaz liquéfié tel que l'hélium. Au-dessus du niveau libre du liquide, on trouve des vapeurs froides d'hélium 7 qui résultent de l'évaporation du liquide. Le col 2a du vase 2 est muni d'une canalisation 5 raccordée à un circuit de récupération des vapeurs qui permettent de les évacuer au fur et à mesure de leur apparition. Le liquide cryogénique 4 contenu dans le vase 2 doit être acheminé vers un vase d'utilisation 108 qui a été schématisé en traits mixtes pour indiquer qu'il n'est pas mis en place de manière permanente, mais seulement pendant certaines périodes d'utilisation. Le col 108a de ce vase d'utilisation est raccordé, comme expliqué précédemment, à une pompe 19 par la canalisation 18 qui a pour but de créer une légère dépression qui assure la mise en circulation du gaz liquéfié dans le tube de transfert 10. Lorsque l'extrémité libre de la ligne de transfert n'est pas raccordée au vase d'utilisation 108, c'est-à-dire lorsqu'elle est à l'air libre, un bec de canard 109 escamotable permet la sortie de l'hélium gazeux, tout en interdisant l'entrée d'air dans le tube de transfert. Le volume interne 24 délimité par la paroi externe du tube de transfert 10 et la paroi interne du tube externe 12 est rempli d'un matériau super isolant. Cet espace est fermé, à chacune des extrémités 10a et 10b du tube de transfert 10 par des parois transversales 12a et 12b respectivement.

Conformément à l'invention, à l'intérieur de l'espace libre 24, on trouve un écran thermique qui a pour fonction de limiter les échanges thermiques entre l'atmosphère extérieure au tube 12 et le tube de transfert 10. Cet écran thermique est constitué par un tube à simple paroi, désigné par la référence 26, qui est disposé coaxialement aux tubes 10 et 12. A l'une de ses extrémités 26a située à l'intérieur du col 2a du vase de stockage, l'écran thermique est refroidi par les vapeurs d'hélium issu du vase de stockage 2 (consommation propre). La consommation propre est la perte enregistrée lorsque le cryostat n'est pas en fonctionnement par l'intermédiaire d'un échangeur 28. Conformément à l'invention l'échangeur est constitué d'un tube en matériau bon conducteur de la chaleur (cuivre par exemple) soudé aux tubes 12 et 26. En outre, conformément à l'invention, l'espace interne 24 est rempli d'un gaz d'échange. La nature et la quantité de ce gaz d'échange sont fonction du liquide à transférer et de la nature des matériaux cryo-absorbants. Le gaz d'échange utilisé est aussi fonction de la géométrie du cryostat. Dans cet exemple le gaz liquéfié est l'hélium et le gaz d'échange le néon.

En outre, conformément l'invention, un matériau cryo-absorbant 25 recouvre, au moins partiellement, la paroi externe de l'écran thermique 26 et éventuellement sa paroi interne. Ce matériau cryo-absorbant est par exemple constitué par du charbon actif. Comme il est bien connu dans l'état de la technique, ce matériau permet de cryo-pomper le gaz d'échange, c'est-à-dire de créer un vide dans l'espace interne 24. De préférence, on dispose également une quantité de ce même matériau sur le fond 12b de la ligne de transfert.

Ainsi, pendant la mise en température de la ligne, un contact thermique par un gaz d'échange est assuré, ce qui permet une accélération des échanges thermiques et par suite une mise en température d'équilibre rapide du matériau super isolant dont on a garni l'espace interne 24. Le gaz d'échange est cryo-pompé lorsque la température de mise en froid de la ligne de transfert est obtenue, ce qui assure un vide d'isolement entre l'atmosphère externe et le tube de transfert 10.

Comme on le remarque, dans ce mode de réalisation, le tube de transfert 10 est ouvert à son extrémité située du côté du vase d'utilisation.

On a représenté sur la figure 3 une variante de réalisation du dispositif de la figure 2 adapté au cas d'un transfert de maintenance. Dans cette solution, la ligne de transfert désignée par la référence générale 206, est mise en place de manière permanente entre le réservoir de stockage 2 et le réservoir d'utilisation 208. Comme dans le cas du mode de réalisation de la figure 2, la circulation du fluide liquéfié est assurée au moyen d'une pompe 19 qui assure une mise en dépression légère du volume interne délimité par le réservoir 208 par rapport au volume interne délimité par le réservoir 2. Le volume intérieur délimité par le tube 10 et le tube externe divisé en deux parties 24a et 24b qui contiennent chacune un volume d'un gaz d'échange qui a pour but d'assurer par conduction une mise à la température du super isolant contenu dans chacun de ces volumes 24a et 24b. On remarque que dans ce mode de réalisation, l'écran thermique est relié à un échangeur 28 et 28' à chacune de ses extrémités.

L'écran thermique pour être avantageusement réalisé à partir d'un tube ou d'une tresse souple en matériau bon conducteur de la chaleur tel que le cuivre ou l'aluminium.

Le centrage de l'écran thermique est assuré par le matériau super isolant.

**Revendications**

1. Installation cryogénique comportant un vase de stockage (2) présentant un corps (2b) surmonté d'un col (2a) muni d'une ouverture, le corps (2b) contenant une quantité d'un gaz liquéfié, une canalisation d'aspiration (5) étant raccordée au col (2a) du vase de stockage (2); et une ligne de transfert de gaz liquéfié pour transférer ce gaz entre le vase de stockage (2) et un vase d'utilisation (108, 208), comportant un tube de transfert (10) ayant une première extrémité (10a) plongeant dans le gaz liquéfié contenu dans le vase de stockage (2) et une seconde extrémité (10b) apte à être reliée au vase d'utilisation (108, 208), un tube externe (12) entourant le tube de transfert (10) et délimitant avec ce dernier un volume (24) et un écran (26) formé par un élément tubulaire, disposé dans le volume interne (24) compris entre le tube de transfert (10) et le tube externe (12), la ligne de transfert présentant sensiblement la forme d'un U renversé constitué par une première et une seconde branches sensiblement verticales, la première branche étant introduite au moins partiellement dans le col (2a) du vase de stockage, la seconde branche étant apte à être introduite au moins partiellement dans un col (108a) du vase d'utilisation (108), au moins un échangeur (28) relié thermiquement à l'écran (26), ledit échangeur (28) étant refroidi par une circulation de vapeurs froides provenant de la vaporisation d'une partie du gaz liquéfié (4) contenue dans le vase de stockage (2) et aspirée par la canalisation d'aspiration (5), caractérisée en ce que ledit au moins un échangeur (28) est situé exclusivement dans la première branche de la ligne de transfert et à l'intérieur du col (2a) du réservoir de stockage (2).

2. Installation cryogénique selon la revendication 1, caractérisée en ce qu'elle comporte en outre un vase de réception (108) présentant un corps (108b) et un col (108a) muni d'une ouverture, ledit corps (108b) étant destiné à recevoir une quantité d'un gaz liquéfié transférée à partir du vase de stockage (2) par l'intermédiaire de la ligne de transfert, une canalisation d'aspiration (18) étant raccordée à la partie supérieure du col (208a), ledit écran (26) étant muni d'un second échangeur thermique (28')) situé dans la seconde branche de la ligne de transfert et à l'intérieur du col (208a) du réservoir d'utilisation (208) et relié thermiquement à l'écran (26), ledit échangeur (28') étant refroidi par une circulation de vapeurs froides provenant de la vaporisation d'une partie du gaz liquéfié (4) contenue dans le vase d'utilisation (208) et aspirée par la canalisation d'aspiration (18).

3. Ligne de transfert de gaz liquéfié pour transférer un gaz liquéfié entre un vase de stockage (2) et un vase d'utilisation (108, 208), comportant un tube de transfert (10) ayant une première extrémité (10a) apte à être plongée dans une quantité (4) d'un gaz liquéfié contenue dans le vase de stockage (2) et une seconde extrémité (10b) apte à être reliée au vase d'utilisation (108, 208), un tube externe (12) entourant le tube de transfert (10) et délimitant avec ce dernier un volume (24) et un écran (26) formé par un élément tubulaire disposé dans le volume interne (24) compris entre le tube de transfert (10) et le tube externe (12), ladite ligne de transfert présentant sensiblement la forme d'un U renversé constitué d'une première et d'une seconde branches sensiblement verticales, ladite première branche étant apte à être introduite au moins partiellement dans un col (2a) du vase de stockage (2), la seconde branche étant apte à être introduite au moins partiellement dans un col (108a, 208a) d'un vase d'utilisation (108, 208), un échangeur (28) relié thermiquement à l'écran (26), l'échangeur (28) étant destiné à être refroidi par une circulation de vapeurs froides provenant de la vaporisation d'une partie du gaz liquéfié contenue dans le vase de stockage et aspirée par une canalisation d'aspiration raccordée à ce col, caractérisée en ce que ledit échangeur (28) est situé exclusivement dans la première branche de la ligne de transfert.

4. Ligne de transfert selon la revendication 3, caractérisée en ce que l'écran (26) est recouvert au moins partiellement d'un matériau cryo-absorbant.

5. Ligne de transfert selon l'une quelconque des revendications 3 ou 4, caractérisée en ce que ledit écran thermique (26) est constitué par un tube ou une tresse réalisé à partir d'un matériau bon conducteur de la chaleur.

6. Ligne de transfert selon l'une quelconque des revendications 3 à 5, caractérisée en ce que le centrage de l'écran thermique est assuré par l'intermédiaire d'un matériau super isolant disposé d'une part entre cet écran et le tube externe (12) et d'autre part entre ledit écran (26) et le tube de transfert (10).

**Patentansprüche**

1. Cryogenanlage, enthaltend einen Lagerbehälter (2), der einen Körper (2b) aufweist, an den sich oben ein Hals (2a) anschließt, der mit einer Öffnung versehen ist, welcher Körper (2b) eine Menge eines verflüssigten Gases enthält, wobei eine Ansaugleitung (5) mit dem Hals (2a) des Lagerbehälters (2) verbunden ist; und eine Flüssiggasübertragungsleitung für die Übertragung dieses Gases zwischen dem Lagerbehälter (2) und einem Gebrauchsbehälter (108, 208), enthaltend ein Übertragungsrohr (10), das ein erstes Ende (10a) aufweist, das in das Flüssiggas in dem Lagerbehälter (2) eintaucht, und ein zweites Ende (10b) aufweist, das dazu eingerichtet ist, mit dem Gebrauchsbehälter (108, 208) verbunden zu werden, mit einem Außenrohr (12), das das Übertragungsrohr (10) umgibt und mit diesem ein Volumen (24) umgrenzt, und mit einer Abschirmung (26), die von einem tubusförmigen Element gebildet ist und die in dem Innenvolumen (24) zwischen dem Übertragungsrohr (10) und dem Außenrohr (12) angeordnet ist, wobei die Übertragungsleitung im wesentlichen die Gestalt eines umgekehrten U aufweist, gebildet von einem ersten und einem zweiten im wesentlichen vertikalen Schenkel, wobei der erste Schenkel wenigstens teilweise in den Hals (2a) des Lagerbehälters eingeführt ist, der zweite Schenkel dazu eingerichtet ist, wenigstens teilweise in einen Hals (108a) des Gebrauchsbehälters (108) eingeführt zu werden, wenigstens einen Tauscher (28), der thermisch mit der Abschirmung (26) verbunden ist, wobei der Tauscher (28) durch eine Kühldampfzirkulation gekühlt ist, die von der Verdampfung eines Teils des Flüssiggases (4) stammt, das in dem Lagerbehälter (2) enthalten ist und von der Ansaugleitung (5) angesaugt wird, dadurch gekennzeichnet, daß der genannte wenigstens eine Tauscher (28) ausschließlich in dem ersten Schenkel der Übertragungsleitung und dem Innern des Halses (2a) des Lagerbehälters (2) angeordnet ist.

2. Cryogenanlage nach Anspruch 1, dadurch gekennzeichnet, daß sie weiterhin einen Aufnahmebehälter (108) enthält, der einen Körper (108b) und einen Hals (108a) aufweist, der mit einer Öffnung versehen ist, wobei der Körper (108b) dazu bestimmt ist, eine Menge eines von dem Lagerbehälter (2) über die Übertragungsleitung übertragenen Flüssiggases entgegenzunehmen, wobei eine Ansaugleitung (18) mit dem oberen Abschnitt des Halses (208a) verbunden ist, die Abschirmung (26) mit einem zweiten Wärmetauscher (28') verbunden ist, der in dem zweiten Schenkel der Übertragungsleitung und dem Innern des Halses (208a) des Gebrauchsbehälters (208) angeordnet und thermisch mit der Abschirmung (26) verbunden ist, wobei der genannte Tauscher (28') durch eine Kühldampfzirkulation gekühlt ist, die von der Verdampfung eines Teils des in dem Gebrauchsbehälter (208) enthaltenen Flüssiggases (4) stammt und durch den Ansaugkanal (18) angesaugt wird.

3. Übertragungsleitung für Flüssiggas für die Übertragung eines verflüssigten Gases zwischen einem Lagerbehälter (2) und einem Gebrauchsbehälter (108, 208), enthaltend ein Übertragungsrohr (10), das ein erstes Ende (10a) hat, das dazu eingerichtet ist, in eine Menge (4) eines Flüssiggases eingetaucht zu werden, das in dem Lagerbehälter (2) enthalten ist, und ein zweites Ende (10b) aufweist, das dazu eingerichtet ist, mit dem Gebrauchsbehälter (108, 208) verbunden zu werden, mit einem Außenrohr (12), das das Übertragungsrohr (10) umgibt und mit diesem ein Volumen (24) umgibt, und mit einer Abschirmung (26), die von einem tubusförmigen Element gebildet ist, das in dem inneren Volumen (24) zwischen dem Übertragungsrohr (10) und dem Außenrohr (12) angeordnet ist, wobei die Übertragungsleitung im wesentlichen die Form eines umgekehrten U aufweist, bestehend aus einem ersten und aus einem zweiten im wesentlichen vertikalen Schenkel, wobei der erste Schenkel dazu eingerichtet ist, wenigstens teilweise in einen Hals (2a) des Lagerbehälters (2) eingetaucht zu werden, der zweite Schenkel dazu eingerichtet ist, wenigstens teilweise in einen Hals (108a, 208a) eines Gebrauchsbehälters (108, 208) eingeführt zu werden, mit einem Tauscher (28), der thermisch mit der Abschirmung (26) verbunden ist und der dazu bestimmt ist, durch eine Kaltdampfzirkulation gekühlt zu werden, die aus der Verdampfung eines Teils des Flüssiggases stammt, das in dem Lagerbehälter enthalten ist und durch eine Saugleitung angesaugt wird, die mit dem Hals verbunden ist, dadurch gekennzeichnet, daß der genannte Tauscher (28) ausschließlich in dem ersten Schenkel der Übertragungsleitung angeordnet ist.

4. Übertragungsleitung nach Anspruch 3, dadurch gekennzeichnet, daß die Abschirmung (26) wenigstens teilweise von einem Cryoabsorptionsmaterial bedeckt ist.

5. Übertragungsleitung nach einem der Ansprüche 3 oder 4, dadurch gekennzeichnet, daß die genannte thermische Abschirmung (26) von einem Rohr oder von einem Geflecht gebildet ist, das aus einem gut wärmeleitfähigen Material besteht.

6. Übertragungsleitung nach einem der Ansprüche 3 bis 5, dadurch gekennzeichnet, daß die Zentrierung der thermischen Abschirmung mittels eines hoch isolierten Materials sichergestellt ist, das einesteils zwischen dieser Abschirmung und dem Außenrohr (12) und anderenteils zwischen der genannten Abschirmung (26) und dem Übertragungsrohr (10) angeordnet ist.

## Claims

1. Cryogenic installation comprising a storage vessel (2) whose body (2b) has at the top a neck (2a) provided with an opening, the body (2) containing an amount of a liquefied gas and a suction pipe (5) being connected to the neck (2a) of the storage vessel (2); and a liquefied gas transfer line for transferring the gas between the storage vessel (2) and a utilization vessel (108, 208), said line comprising a transfer pipe (10) having a first end (10a) immersed in the liquefied gas contained in the storage vessel (2) and a second end (10b) adapted to be connected to the utilization vessel (108, 208), an external pipe (12) surrounding the transfer pipe (10) and delimiting, together with the latter, a space (24), and a shield (26) formed by a tubular member disposed in the internal space (24) existing between the transfer pipe (10) and the external pipe (12), the transfer line having substantially the shape of an inverted U composed of substantially vertical first and second branches, the first branch being introduced at least partially into the neck (2a) of the storage vessel and the second branch being adapted to be introduced at least partially into a neck (108a) of the utilization vessel (108), at least one exchanger (28) connected thermally to the shield (26), said exchanger (28) being cooled by the circulation of cold vapours produced by the vaporization of a part of the liquefied gas (4) contained in the storage vessel (2) and sucked through the suction pipe (5), characterized in that said at least one exchanger (28) is situated exclusively in the first branch of the transfer line and inside the neck (2a) of the storage vessel (2).

2. Cryogenic installation according to Claim 1, characterized in that it additionally comprises a receiver vessel (108) having a body (108b) and a neck (108a) provided with an opening, said body (108b) being intended to receive an amount of a liquefied gas transferred from the storage vessel (2) through the transfer line, a suction pipe (18) being connected to the top part of the neck (208a), said shield (26) being provided with a second heat exchanger (28') situated in the second branch of the transfer line and inside the neck (208a) of the utilisation vessel (208) and connected thermally to the shield (26), said exchanger (28') being cooled by the circulation of cold vapours produced by the vaporization of a part of the liquefied gas (4) contained in the utilization vessel (208) and sucked through the suction pipe (18).

3. Liquefied gas transfer line for transferring a liquefied gas between a storage vessel (2) and a utilization vessel (108, 208), comprising a transfer pipe (10) having a first end adapted to be immersed in an amount (4) of a liquefied gas contained in the storage vessel (2) and a second end (10b) adapted to be connected to the utilization vessel (108, 208), an external pipe (12) surrounding the transfer pipe (10) and delimiting, together with the latter, a space (24), and a shield (26) formed by a tubular member disposed in the internal space (24) existing between the transfer pipe (10) and the external pipe (12), said transfer line having substantially the shape of an inverted U consisting of substantially vertical first and second branches, said first branch being adapted to be introduced at least partially into a neck (2a) of the storage vessel (2) and the second branch being adapted to be introduced at least partially into a neck (108a, 208a) of a utilization vessel (108, 208), an exchanger (28) connected thermally to the shield (26), the exchanger (28) being intended to be cooled by the circulation of cold vapours produced by the vaporization of a part of the liquefied gas contained in the storage vessel and sucked through a suction pipe connected to said neck, characterized in that said exchanger (28) is situated exclusively in the first branch of the transfer line.

4. Transfer line according to Claim 3, characterized in that the shield (26) is at least partly covered with a cryoabsorbent material.

5. Transfer line according to either of Claims 3 and 4, characterized in that said thermal shield (26) consists of a tube or braid made of a material which is a good conductor of heat.

6. Transfer line according to any one of Claims 3 to 5, characterized in that the centering of the thermal shield is effected with the aid of a superinsulating material disposed on the one hand between said shield and the external pipe (12) and on the other hand between said shield (26) and the transfer pipe (10).

FIG. 1

EP 0 220 086 B1

FIG. 2

FIG. 3